(19) Europäisches Patentamt

European Patent Office

Office européen des brevets

(11) **EP 1 375 249 B1**

(12) **FASCICULE DE BREVET EUROPEEN**

(45) Date de publication et mention
de la délivrance du brevet:
**08.06.2005   Bulletin 2005/23**

(51) Int Cl.⁷: **B60Q 1/115**, B60Q 1/12,
B60Q 1/08

(21) Numéro de dépôt: **03291453.3**

(22) Date de dépôt: **16.06.2003**

(54) **Dispositif et procédé de réglage de l'orientation d'au moins un projecteur de véhicule automobile**

Vorrichtung und Verfahren zum Einstellen der Orientierung von wenigstens einem Fahrzeugscheinwerfer

Device and method for adjusting the orientation of at least one vehicle headlamp

(84) Etats contractants désignés:
**AT BE BG CH CY CZ DE DK EE ES FI FR GB GR HU IE IT LI LU MC NL PT RO SE SI SK TR**

(30) Priorité:  **28.06.2002  FR 0208278**

(43) Date de publication de la demande:
**02.01.2004   Bulletin 2004/01**

(73) Titulaire: **VALEO VISION**
**93012 Bobigny Cédex (FR)**

(72) Inventeurs:
• **Brun, Norbert**
**77600 Guermantes (FR)**
• **Tourenq, Jean- Matthieu**
**75014 Paris (FR)**

(74) Mandataire: **Renous Chan, Véronique**
**Valeo Vision,**
**34, rue Saint-André**
**93012 Bobigny Cedex (FR)**

(56) Documents cités:
**EP-A- 1 203 694          FR-A- 2 815 914**

## Description

La présente invention concerne un dispositif et un procédé de réglage de 'orientation d'au moins un projecteur de véhicule automobile.

On connaît déjà dans l'état de la technique, notamment d'après FR-A-2 815 914 (FR-00 13890), un dispositif de réglage de l'orientation d'au moins un projecteur de véhicule automobile, selon les caractéristiques techniques du préambule de la revendication 1.

Ce dispositif permet notamment de corriger de façon automatique l'orientation en site du projecteur lors de variation de l'assiette du véhicule. Toutefois, ce dispositif ne permet pas de déterminer certains paramètres pertinents relatifs à la tenue de route du véhicule tels que notamment l'écrasement du véhicule (variation de la hauteur du véhicule par rapport au sol).

L'invention a pour but de proposer un dispositif de réglage du type précité permettant de déterminer des paramètres pertinents relatifs à la tenue de route du véhicule tels que l'écrasement du véhicule, ceci en limitant le nombre de capteurs portés par le véhicule.

A cet effet, l'invention a pour objet un dispositif de réglage de l'orientation d'au moins un projecteur de véhicule automobile, du type précité, **caractérisé en ce que,** les première et seconde sources de rayonnement sont décalées verticalement entre elles, et les premier et second faisceaux incidents sont sensiblement parallèles entre eux.

Suivant des caractéristiques de différents modes de réalisation de ce dispositif :

- les moyens de commande pilotent des moyens de positionnement du projecteur, de préférence motorisés ;
- les moyens de positionnement du projecteur comprennent des moyens formant actionneur de positionnement en site du projecteur ;
- les moyens de positionnement du projecteur comprennent des moyens formant actionneur de positionnement en azimut du projecteur ;
- le dispositif comprend deux modules de réglage associés respectivement à deux projecteurs gauche et droit du véhicule ;
- les première et seconde sources de rayonnement et les moyens de détection des premier et second faisceaux réfléchis par la cible sont communs à deux projecteurs gauche et droit du véhicule ;
- le module de réglage est associé à un des deux projecteurs, dit projecteur maître, les moyens de commande pilotant les moyens de positionnement du projecteur maître et des moyens de positionnement de l'autre des deux projecteurs, dit projecteur esclave ;
- les moyens de détection comprennent un détecteur surfacique tel qu'un détecteur bidimensionnel sensible en position de type PSD (Position Sensing Detector) ou une caméra de type CCD (Charge Coupled Device) ;
- le détecteur surfacique est séparé de chaque source de rayonnement ;
- les moyens de détection sont communs aux rayonnements réfléchis par la cible provenant des première et seconde sources de rayonnement ;
- les moyens de détection sont spécifiques à chaque rayonnement réfléchi par la cible provenant d'une source de rayonnement ;
- chaque source de rayonnement et les moyens de détection qui lui sont spécifiques forment un télémètre optique utilisant une diode laser ;
- le dispositif comprend des moyens d'inhibition du module de réglage ;
- les moyens d'inhibition comprennent :

  ■ une source supplémentaire de rayonnement électromagnétique émettant un faisceau incident supplémentaire vers la cible,
  ■ des moyens supplémentaires de détection du rayonnement électromagnétique provenant de la source supplémentaire et réfléchi par la cible, et
  ■ des moyens de commande de l'inhibition du module de réglage par traitement d'un signal émis par les moyens de détection supplémentaires ;

- le rayonnement électromagnétique est de type infra-rouge produit par une diode laser ;
- la cible est le sol, notamment la route s'étendant devant le véhicule.

L'invention a également pour objet un procédé de réglage de l'orientation d'au moins un projecteur de véhicule automobile au moyen d'un dispositif tel que défini ci-dessus dans lequel les première et seconde sources de rayonnement sont décalées verticalement d'une hauteur $H$, la cible étant sensiblement horizontale, par lequel:

- on détermine, dans un plan contenant les axes optiques des premier et second faisceaux incidents,

  ■ lors d'une phase d'étalonnage :

    • des première $D_1$ et seconde $D_2$ distances de référence parcourues respectivement par les premier et second faisceaux incidents entre, d'une part, les première et seconde sources de rayonnement et, d'autre part, la cible,
    • un angle $\alpha$ de référence correspondant à l'inclinaison des faisceaux incidents par rapport à l'horizontale, en fonction de $H$, $D_1$ et $D_2$,

  ■ à un temps $t$ suivant la phase d'étalonnage :

- • les première $D_1$' et seconde $D_2$' distances parcourues respectivement par les premier et second faisceaux incidents entre, d'une part, les première et seconde sources de rayonnement et, d'autre part, la cible,
- • l'angle $\alpha$' d'inclinaison des faisceaux incidents par rapport à l'horizontale, en fonction de $H$, $D_1$' et $D_2$',

- on commande l'orientation du projecteur en fonction de $\Delta\alpha = \alpha'-\alpha$.

Suivant une autre caractéristiques de ce procédé on détermine au temps $t$ l'écrasement éventuel $E$ du véhicule, dans un plan contenant les axes optiques des premier et second faisceaux incidents, en fonction de paramètres choisis parmi $H$, $D_1$, $D_2$, $D_1$', $D_2$' et $\alpha$'.

Suivant encore une autre caractéristique de ce procédé, les deux projecteurs gauche et droit étant espacés entre eux d'une distance $L$, on détermine au temps $t$ :

- dans le plan contenant les axes optiques des premier et second faisceaux incidents, l'écrasement éventuel $E_G, E_D$ du véhicule fourni par chaque module de réglage, et
- l'angle $\beta$ de roulis du véhicule en fonction de $E_G, E_D$ et $L$.

L'invention sera mieux comprise à la lecture de la description qui va suivre, donnée uniquement à titre d'exemple et faite en se référant aux dessins dans lesquels :

- la figure 1 est une vue schématique en perspective d'un véhicule automobile muni d'un dispositif de réglage selon l'invention ;
- la figure 2 est une vue schématique d'un dispositif de réglage selon un premier mode de réalisation de l'invention ;
- la figure 3 est une vue schématique en perspective des première et seconde sources de rayonnement électromagnétique et des moyens associés de détection de rayonnement électromagnétique réfléchi ;
- la figure 4 est une vue schématique dans un plan des mêmes éléments que ceux de la figure 3 ;
- la figure 5 est une vue schématique des images, dans les moyens de détection, des rayonnements réfléchis par la cible ;
- les figures 6 et 7 sont des vues schématiques des trajets optiques des rayonnements incident et réfléchi associés aux deux sources de rayonnement respectivement ;
- la figure 8 est une vue schématique montrant un exemple d'évolution des trajets optiques des rayonnements incidents des deux sources de rayonnement ;
- la figure 9 est une vue similaire à la figure 2 d'un dispositif de réglage selon un second mode de réalisation de l'invention.

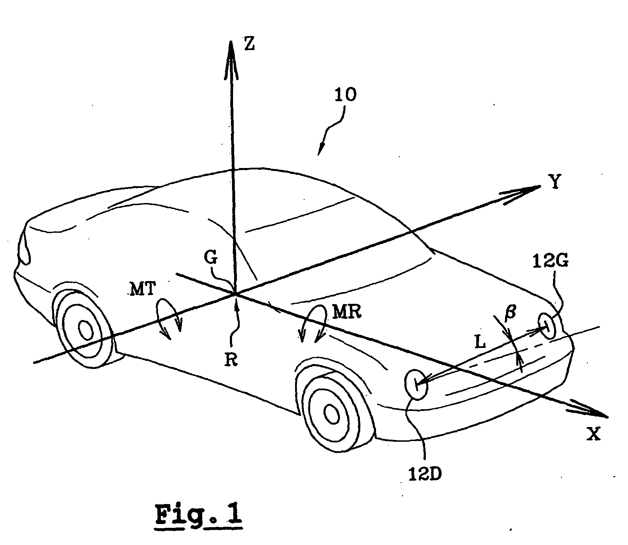

On a représenté sur la figure 1 un véhicule automobile 10 muni d'un dispositif, selon l'invention pour le réglage de l'orientation d'au moins un projecteur de ce véhicule 10.

On a également représenté sur la figure 1, un repère R dont les axes correspondent aux directions associées habituellement à un véhicule automobile. Ainsi, le repère R comprend un premier axe X correspondant à la direction horizontale longitudinale du véhicule, un deuxième axe Y correspondant à la direction horizontale transversale du véhicule et un troisième axe Z correspondant à la direction verticale du véhicule. Habituellement, les axes X, Y et Z ont pour origine le centre de gravité G du véhicule.

On appelle généralement roulis les oscillations du véhicule 10 autour de l'axe X (schématisées par la flèche MR sur la figure 1) et tangage les oscillations du véhicule 10 autour de l'axe Y (schématisées par la flèche MT sur la figure 1).

Le véhicule 10 est muni de deux projecteurs gauche 12G et droit 12D dont l'orientation par rapport au sol varie en fonction notamment du roulis et du tangage du véhicule.

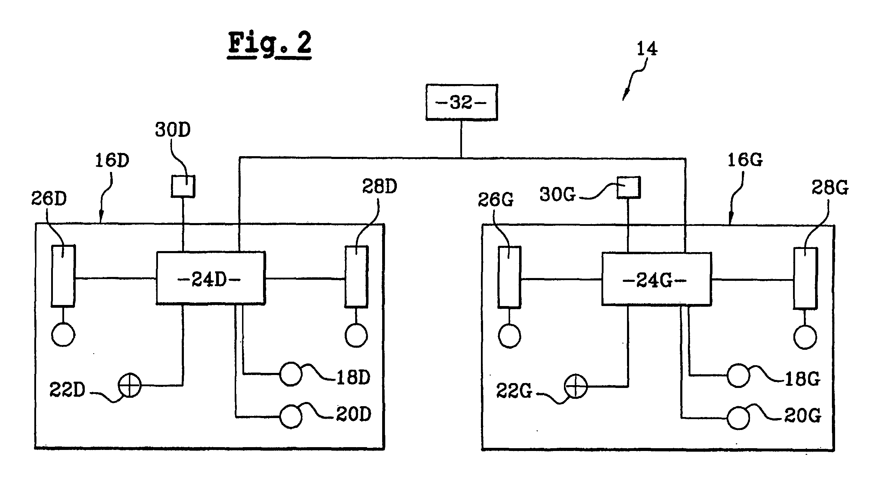

On a représenté sur la figure 2 un dispositif de réglage de l'orientation d'au moins un projecteur du véhicule, selon un premier mode de réalisation de l'invention. Ce dispositif de réglage est désigné par la référence générale 14.

Le dispositif de réglage 14 selon le premier mode de réalisation de l'invention est destiné à régler l'orientation des deux projecteurs gauche 12G et droit 12D du véhicule.

Ainsi, le dispositif de réglage 14 comprend deux modules de réglage 16G, 16D, associés respectivement aux deux projecteurs 12G, 12D. Ces modules 16G, 16D sont portés par le véhicule.

Chaque module de réglage 16G, 16D comprend des première 18G, 18D et seconde 20G, 20D sources classiques de rayonnement électromagnétique émettant respectivement des premier FI1 et second FI2 faisceaux incidents vers une cible séparée du véhicule. Le rayonnement électromagnétique est par exemple de type infrarouge produit par une diode laser. La cible est généralement le sol, notamment la route s'étendant sensiblement horizontalement devant le véhicule.

Chaque module de réglage 16G, 16D comprend également des moyens classiques 22G, 22D de détection du rayonnement électromagnétique réfléchi par la cible et des moyens 24G de commande de l'orientation du projecteur associé 12G, 12D par traitement d'un signal émis par ces moyens de détection 24G, 24D. En variante, les moyens de commande pourraient être communs aux deux modules de réglage 16G, 16D.

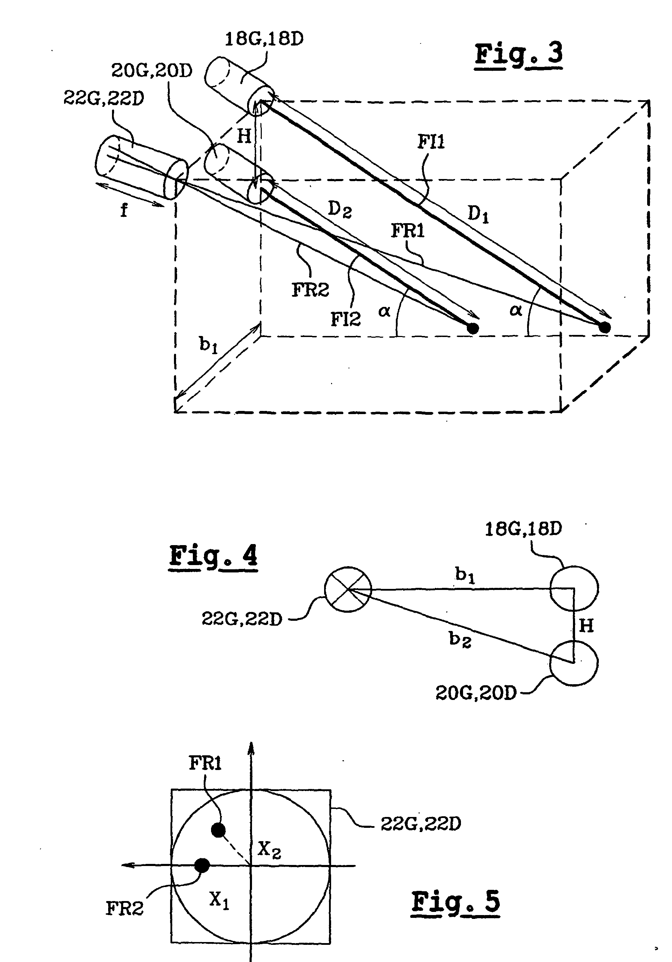

La figure 3 montre le positionnement relatif dans l'espace des première 18G, 18D et seconde 20G, 20D sources de rayonnement d'un module de réglage 16G, 16D par rapport aux moyens de détection 22G, 22D de ce module de réglage.

On voit sur la figure 3 que, pour chaque module de réglage 16G, 16D, la cible réfléchit deux faisceaux FR1, FR2 correspondant aux deux faisceaux incidents FI1, FI2 émis par les première 18G, 18D et seconde 20G, 20D sources du module. Ces deux faisceaux réfléchis FR1, FR2 sont dirigés vers les moyens de détection 22G, 22D du module de réglage. Les moyens de détection 22G, 22D sont donc communs aux deux faisceaux réfléchis FR1, FR2.

On notera que dans chaque module de réglage 16G, 16D, les première 18G, 18D et seconde 20G, 20D sources de rayonnement sont décalées verticalement entre elles d'une hauteur $H$. On notera également que les premier FI1 et second FI2 faisceaux incidents sont sensiblement parallèles entre eux.

Les moyens de détection 22G, 22D forment par exemple un détecteur surfacique tel qu'un détecteur bidimensionnel sensible en position de type PSD (Position Sensing Detector) ou une caméra de type CCD (Charge Coupled Device). Un tel détecteur comprend de façon connue en soi des moyens optiques classiques, de focale $f$, destinés à recevoir les faisceaux réfléchis FR1, FR2.

On notera que, dans l'exemple représenté sur les figures, le détecteur surfacique est séparé de chaque source de rayonnement 18G, 18D, 20G, 20D. En effet, comme cela est représenté notamment sur la figure 4 (le plan de la figure 4 est parallèle au plan GY, GZ), les moyens de détection 22G, 22D sont disposés à une distance $b_1$ de la première source de rayonnement 18G, 18D et à une distance $b_2$ de la seconde source de rayonnement 20G, 20D.

Sur la figure 5, on a représenté les images dans le détecteur surfacique des faisceaux réfléchis FR1, FR2. Ce détecteur surfacique fournit les distances $x_1$, $x_2$ des images des faisceaux réfléchis FR1, FR2 par rapport à l'axe optique des moyens de détection 22G, 22D.

Les moyens de commande 24G, 24D de chaque module de réglage 16G, 16D pilotent des moyens de positionnement du projecteur associé 12G, 12D. Ces moyens de positionnement sont, de préférence, motorisés.

Dans l'exemple représenté sur la figure 2, les moyens de positionnement de chaque projecteur comprennent des moyens 26G, 26D formant actionneur de positionnement en site du projecteur, destinés notamment à compenser des effets du tangage du véhicule, et des moyens 28G, 28D formant actionneur de positionnement en azimut du projecteur.

Dans chaque module de réglage 16G, 16D, les sources de rayonnement 18G, 18D, 20G, 20D, les moyens de détection 22G, 22D et les moyens de positionnement 26G, 26D, 28G, 28D sont reliés de façon connue en soi aux moyens de commande 24G, 24D. Ces derniers sont reliés à des moyens classiques 30G, 30G d'alimentation électrique.

De préférence, les moyens de commande 24G, 24D des deux modules de réglage 16G, 16D sont également reliés à une unité centrale commune 32, portée par le véhicule et reliée à différents organes de ce véhicule, de façon à pouvoir échanger des données diverses avec cette unité centrale 32.

Les modules de réglage 16G, 16D sont fixés par exemple sur des réflecteurs respectifs des projecteurs 12G, 12D. Ces réflecteurs peuvent constituer des réflecteurs de feux de route ou de feux anti-brouillard. En variante, les modules de réglage 16G, 16D peuvent être fixés sur d'autres organes du véhicule, par exemple sur le bouclier de ce véhicule.

Pour régler l'orientation de chaque projecteur 12G, 12D du véhicule au moyen du dispositif de réglage 14, on procède de la façon suivante.

Tout d'abord on réalise une phase d'étalonnage au cours de laquelle on détermine, dans un plan contenant les axes optiques des premier FI1 et second F12 faisceaux incidents, des première $D_1$ et seconde $D_2$ distances de référence. Ces deux distances $D_1$, $D_2$ sont celles parcourues respectivement par les premier FI1 et second FI2 faisceaux incidents entre, d'une part, les première 18G, 18D et seconde 20G, 20D sources de rayonnement et, d'autre part, la cible (le sol).

Les distances $D_1$, $D_2$ sont déterminées notamment à partir des relations suivantes :

$$D_1 = \frac{b_1 . f}{x_1} \text{ et } D_2 = \frac{b_2 . f}{x_2}$$

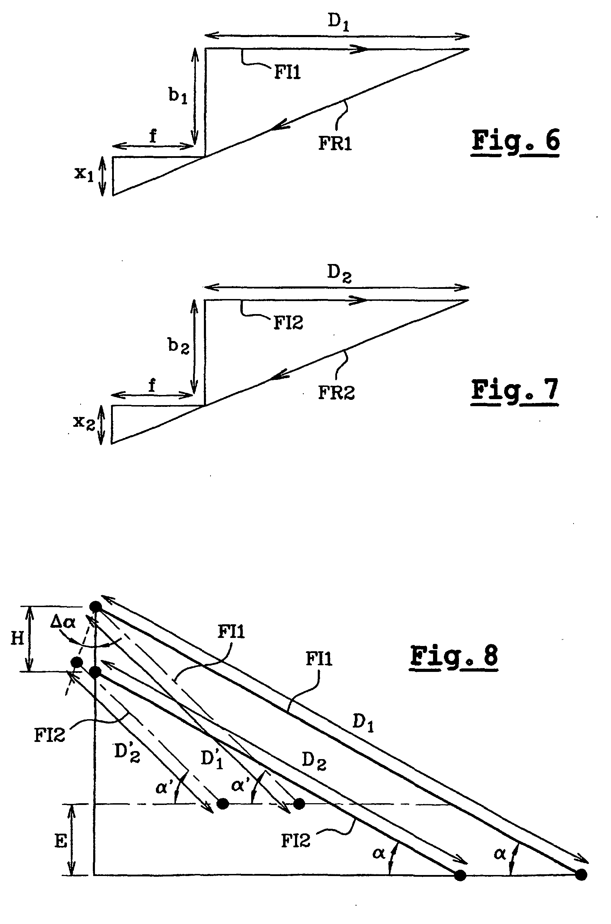

Ces relations se déduisent de considérations géométriques établies, par exemple, à partir des figures 6 et 7.

Toujours pendant la phase d'étalonnage, on détermine un angle $\alpha$ de référence correspondant à l'inclinaison des faisceaux incidents FI1, FI2 par rapport à l'horizontale, ceci dans le plan contenant les axes optiques des premier FI1 et second FI2 faisceaux incidents. Cet angle $\alpha$ de référence est déterminé en fonction de $H$, $D_1$ et $D_2$, par exemple à partir de la relation suivante :

$$\alpha = \arcsin \frac{H}{D_2 - D_1}$$

Cette relation se déduit de considérations géométriques établies, par exemple, à partir de la figure 8 dans laquelle les faisceaux incidents FI1, FI2 et l'angle $\alpha$ de référence sont représentés. On notera que le plan de la figure 8 est parallèle aux trajets optiques des faisceaux incidents FI1, FI2.

Les distances $D_1$, $D_2$, de référence et l'angle

$\alpha$ de référence correspondent par exemple à une orientation optimale d'un feu de route.

En variante, on peut calculer les distances $D_1$, $D_2$ par un procédé classique de télémétrie par mesure de temps de vol. Dans ce cas, les sources de rayonnements 18G, 18D, 20G, 20D et les moyens de détection 22G, 22D représentés sur les figures sont remplacés par deux télémètres optiques utilisant une diode laser disposés en lieu et place des deux sources de rayonnement 18G, 18D, 20G, 20D. De façon classique, chaque télémètre comporte une source de rayonnement et des moyens de détection du rayonnement réfléchi. Ainsi, contrairement au cas représenté sur les figures, les moyens de détection de chaque télémètre sont spécifiques à chaque rayonnement réfléchi par la cible provenant de la source de rayonnement du télémètre.

Les distances $D_1$, $D_2$ fournies par le procédé de télémétrie par mesure de temps de vol sont déterminées à partir des relations suivantes :

$$D_1 = \frac{1}{2}ct_1 \text{ et } D_2 = \frac{1}{2}ct_2$$

dans lesquelles $c$ est la vitesse de la lumière et $t_1$ et $t_2$ sont les durées associées respectivement aux deux télémètres entre l'instant d'émission d'une impulsion de rayonnement par un télémètre et l'instant de réception de l'impulsion réfléchie par le télémètre.

Après la phase d'étalonnage, on détermine, à un temps t, dans le plan contenant les axes optiques des premier FI1 et second FI2 faisceaux incidents, les première $D_1'$ et seconde $D_2'$ distances parcourues respectivement par les premier FI1 et second FI2 faisceaux incidents entre, d'une part, les première 18G, 18D et seconde 20G, 20D sources de rayonnement et, d'autre part, la cible.

Sur la figure 8, on a représenté en traits mixtes les faisceaux incidents FI1 et FI2 au temps t postérieur à l'étalonnage. Les valeurs de $D_1'$ et $D_2'$ sont déterminées par des relations analogues, mutatis mutandis, à celles permettant la détermination de $D_1$ et $D_2$.

On détermine également au temps t, dans le plan contenant les axes optiques des premier FI1 et second FI2 faisceaux incidents, l'angle $\alpha'$ d'inclinaison des faisceaux incidents FI1, FI2 par rapport à l'horizontale. Cet angle $\alpha'$ est déterminé en fonction de $H$, $D_1'$ et $D_2'$, par exemple à partir de la relation suivante :

$$\alpha' = \arctan\left( k \times \frac{H}{D_2' - D_1'} \right)$$

dans laquelle k est une constante.

Cette relation se déduit de considérations géométriques établies, par exemple, à partir de la figure 8.

Enfin, on commande orientation du projecteur au moins en fonction de $\Delta\alpha = \alpha' - \alpha$.

De préférence, on détermine également au temps t, dans un plan contenant les axes optiques des premier et second faisceaux incidents, l'écrasement éventuel $E$ du véhicule. Cet écrasement $E$ est déterminé en fonction de paramètres choisis parmi $H$, $D_1$, $D_2$, $D_1'$, $D_2'$ et $\alpha'$, par exemple à partir de la relation suivante :

$$E = \left| \frac{D_1 H}{|D_2 - D_1|} - D_1' \sin\alpha \right|$$

On notera que si $\alpha' = \alpha$ (absence de tangage du véhicule si bien que l'orientation en site du projecteur ne varie pas), alors :

$$|D_2' - D_1'| = |D_2 - D_1| = \text{constante}$$

et l'on obtient les relations suivantes :

$$E = \left| \frac{D_1' - D_1}{D_2 - D_1} \right| \times H = \left| \frac{D_2' - D_2}{D_2 - D_1} \right| \times H$$

Il est possible que les écrasements respectifs $E_G, E_D$ mesurés par les deux modules 16G, 16D soient différents. Ceci correspond à un mouvement de roulis du véhicule qui s'incline d'un angle $\beta$ tel que représenté sur la figure 1.

Ainsi, de préférence, on détermine également au temps t les écrasements $E_G, E_D$ fournis par les deux modules de réglage 16G, 16D ainsi que l'angle $\beta$ de roulis du véhicule en fonction de $E_G, E_D$ et $L$ qui est la distance séparant les deux projecteurs gauche 12G et droit 12D. L'angle $\beta$ est déterminé, par exemple, à partir de la relation suivante :

$$\beta = \arcsin \frac{E_G - E_D}{L}$$

On notera que la détermination de l'angle $\beta$ de roulis du véhicule se fait grâce au dispositif de réglage 14, sans capteur supplémentaire.

Le dispositif de réglage 14 selon l'invention permet donc de déterminer, à tout instant t, l'écrasement $E_G, E_D$ du véhicule fourni par chaque module de réglage 16G, 16D et l'angle $\beta$ de roulis du véhicule. Ces paramètres peuvent être utilisés, comme $\Delta\alpha = \alpha' - \alpha$, pour régler l'orientation des projecteurs 12G, 12D. Les consignes de réglage peuvent être spécifiques à chaque projecteur gauche 12G ou droit 12D.

Les paramètres fournis par le dispositif de réglage 14, à savoir $\alpha$, $\beta$ et $E$ peuvent être combinés avec d'autres paramètres fournis par l'unité centrale 32, tels que par exemple l'angle du volant de direction, pour établir des lois de commande du réglage de l'orientation des projecteurs prenant en compte notamment le comportement du véhicule dans un virage.

On notera que le procédé de réglage de l'orientation de chaque projecteur 12G, 12D du véhicule peut être réalisé automatiquement en étant piloté par exemple par l'unité centrale 32 assistée des moyens de commande 24G, 24D.

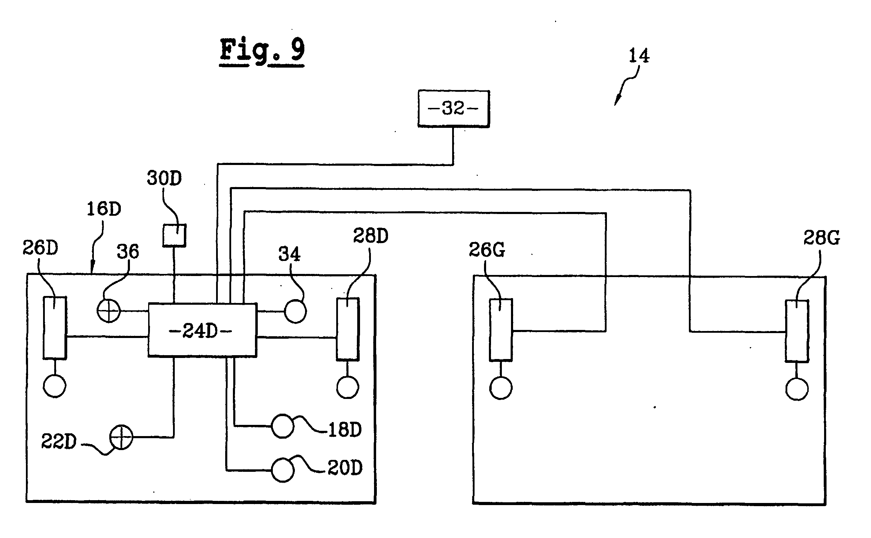

Sur la figure 9, on a représenté un dispositif 14 de réglage de l'orientation des projecteurs 12G, 12D du véhicule, selon un second mode de réalisation de l'invention. Sur cette figure 9, les éléments analogues à ceux des figures précédentes sont désignés par des références identiques.

Dans ce cas, les première 18D et seconde 20D sources de rayonnement et les moyens de détection 22D sont communs aux deux projecteurs droit 12D et gauche 12G du véhicule.

Le module de réglage 16D est associé à un des deux projecteurs, par exemple le projecteur droit 12D, dit projecteur maître. Les moyens de commande 24D pilotent les moyens de positionnement 28D, 26D du projecteur maître et les moyens de positionnement 28G, 26G de l'autre des deux projecteurs, à savoir le projecteur gauche 12G, dit projecteur esclave.

Le dispositif de réglage 14 selon le second mode de réalisation de l'invention comprend également des moyens d'inhibition du module de réglage 16D.

Ces moyens d'inhibition comprennent une source supplémentaire 34 de rayonnement électromagnétique, émettant un faisceau incident supplémentaire vers la cible, et des moyens supplémentaires 36 de détection du rayonnement électromagnétique provenant de cette source supplémentaire et réfléchis par la cible.

Les moyens d'inhibition comprennent également des moyens de commande de l'inhibition du module de réglage 16D, intégrés par exemple dans les moyens de commande 24D. Ces moyens de commande d'inhibition traitent un signal émis par les moyens de détection supplémentaires 36.

Le faisceau incident supplémentaire est orienté de façon à atteindre la cible loin devant les faisceaux incidents FI1 et FI2 des sources 18D, 20D du module de réglage. Ainsi, si les moyens supplémentaires 36 de détection détectent des variations importantes des caractéristiques du faisceau incident supplémentaire alors que les caractéristiques des faisceaux incidents FI1 et FI2 du module de réglage varient peu, on peut considérer que le véhicule s'approche d'un obstacle et qu'il convient d'inhiber le module de réglage 16D. On évite ainsi toute modification intempestive de l'orientation des projecteurs du véhicule.

Parmi les avantages de l'invention, on notera que celle-ci permet de déterminer des paramètres pertinents relatifs à la tenue de route du véhicule tels que l'écrasement du véhicule, ceci en limitant le nombre de capteurs portés par le véhicule, et de régler automatiquement l'orientation des projecteurs du véhicule notamment en fonction de ces paramètres pertinents.

Par ailleurs, le dispositif de réglage 14 permet de régler l'orientation des deux projecteurs 12G, 12D du véhicule à tout moment et donc d'éviter d'avoir à effectuer ce réglage dans la ligne de montage du véhicule.

## Revendications

1. Dispositif de réglage de l'orientation d'au moins un projecteur (12G, 12D) de véhicule automobile, du type comprenant au moins un module de réglage (16G, 16D), porté par le véhicule, comportant :

   - une première source de rayonnement électromagnétique (18G, 18D) émettant un premier faisceau incident (FI1) vers une cible séparée du véhicule,
   - des moyens (22G, 22D) de détection du rayonnement électromagnétique réfléchi par la cible, et
   - des moyens (24G, 24D) de commande de l'orientation du projecteur (12G, 12D) par traitement d'un signal émis par les moyens de détection (22G, 22D),
   - une seconde source de rayonnement électromagnétique (20G, 20D) émettant un second faisceau incident (FI2) vers la cible

   **caractérisé en ce que** les première (18G, 18D) et seconde (20G, 20D) sources de rayonnement sont décalées verticalement entre elles, et les premier (FI1) et second (FI2) faisceaux incidents sont sensiblement parallèles entre eux.

2. Dispositif selon la revendication 1, **caractérisé en ce que** les moyens de commande (24G, 24D) pilotent des moyens (26G, 26D, 28G, 28D) de positionnement du projecteur, de préférence motorisés.

3. Dispositif selon la revendication 2, **caractérisé en ce que** les moyens de positionnement du projecteur (12G, 12D) comprennent des moyens (26G, 26D) formant actionneur de positionnement en site du projecteur.

4. Dispositif selon la revendication 2 ou 3, **caractérisé en ce que** les moyens de positionnement du projecteur (12G, 12D) comprennent des moyens (28G, 28D) formant actionneur de positionnement en azimut du projecteur.

5. Dispositif selon l'une quelconque des revendications 1 à 4, **caractérisé en ce qu'**il comprend deux modules de réglage (16G, 16D) associés respectivement à deux projecteurs gauche (12G) et droit (12D) du véhicule.

6. Dispositif selon l'une quelconque des revendications 1 à 4, **caractérisé en ce que** les première (18G, 18D) et seconde (20G, 20D) sources de rayonnement et les moyens de détection (22G, 22D) des premier (FR1) et second (FR2) faisceaux réfléchis par la cible sont communs à deux projecteurs gauche (12G) et droit (12D) du véhicule.

7. Dispositif selon les revendications 2 et 6 prises ensemble, **caractérisé en ce que** le module de réglage (16D) est associé à un des deux projecteurs (12D), dit projecteur maître, les moyens de commande (24D) pilotant les moyens (26D, 28D) de positionnement du projecteur maître et des moyens (26G, 28G) de positionnement de l'autre des deux projecteurs, dit projecteur esclave.

8. Dispositif selon l'une quelconque des revendications 1 à 7, **caractérisé en ce que** les moyens de détection (22G, 22D) comprennent un détecteur surfacique tel qu'un détecteur bidimensionnel sensible en position de type PSD (Position Sensing Detector) ou une caméra de type CCD (Charge Coupled Device).

9. Dispositif selon la revendication 8, **caractérisé en ce que** le détecteur surfacique est séparé de chaque source de rayonnement (18G, 18D, 20G, 20D).

10. Dispositif selon l'une quelconque des revendications 1 à 9, **caractérisé en ce que** les moyens de détection (22G, 22D) sont communs aux rayonnements réfléchis par la cible provenant des première (18G, 18D) et seconde (20G, 20D) sources de rayonnement.

11. Dispositif selon l'une quelconque des revendications 1 à 9, **caractérisé en ce que** les moyens de détection sont spécifiques à chaque rayonnement réfléchi par la cible provenant d'une source de rayonnement.

12. Dispositif selon la revendication 11, **caractérisé en ce que** chaque source de rayonnement et les moyens de détection qui lui sont spécifiques forment un télémètre optique utilisant une diode laser.

13. Dispositif selon l'une quelconque des revendications 1 à 12, **caractérisé en ce qu'**il comprend des moyens (34, 36) d'inhibition du module de réglage (16D).

14. Dispositif selon la revendication 13, **caractérisé en ce que** les moyens d'inhibition comprennent :

- une source supplémentaire de rayonnement électromagnétique (34) émettant un faisceau incident supplémentaire vers la cible,
- des moyens supplémentaires (36) de détection du rayonnement électromagnétique provenant de la source supplémentaire (34) et réfléchi par la cible, et
- des moyens (24D) de commande de l'inhibition du module de réglage par traitement d'un signal émis par les moyens de détection supplémentaires.

15. Dispositif selon l'une quelconque des revendications précédentes, **caractérisé en ce que** le rayonnement électromagnétique est de type infra-rouge produit par une diode laser.

16. Dispositif selon l'une quelconque des revendications précédentes, **caractérisé en ce que** la cible est le sol, notamment la route s'étendant devant le véhicule.

17. Procédé de réglage de l'orientation d'au moins un projecteur (12G, 12D) de véhicule automobile au moyen d'un dispositif (14) selon l'une quelconque des revendications précédentes dans lequel les première (18G, 18D) et seconde (20G, 20D) sources de rayonnement sont décalées verticalement d'une hauteur $H$, la cible étant sensiblement horizontale, par lequel:

- on détermine, dans un plan contenant les axes optiques des premier (FI1) et second (FI2) faisceaux incidents,

  ■ lors d'une phase d'étalonnage :

  • des première $D_1$ et seconde $D_2$ distances de référence parcourues respectivement par les premier (FI1) et second (FI2) faisceaux incidents entre, d'une part, les première (18G, 18D) et seconde (20G, 20D) sources de rayonnement et, d'autre part, la cible,
  • un angle $\alpha$ de référence correspondant à l'inclinaison des faisceaux incidents (FI1, FI2) par rapport à l'horizontale, en fonction de $H$ , $D_1$ et $D_2$,

  ■ à un temps t suivant la phase d'étalonnage :

  • les première $D_1'$ et seconde $D_2'$ distances parcourues respectivement par les premier (FI1) et second (FI2) faisceaux incidents entre, d'une part, les première (18G, 18D) et seconde (20G, 20D) sources de rayonnement et, d'autre part, la cible,
  • l'angle $\alpha'$ d'inclinaison des faisceaux incidents (FI1, FI2) par rapport à l'horizontale, en fonction de $H$ , $D_1'$ et $D_2'$,

- on commande l'orientation du projecteur (12G, 12D) en fonction de $\Delta\alpha = \alpha' - \alpha$.

18. Procédé selon la revendication 17, **caractérisé en ce que** l'on détermine au temps $t$ l'écrasement éventuel $E$ du véhicule, dans un plan contenant les axes optiques des premier (FI1) et second (FI2) faisceaux incidents, en fonction de paramètres choisis parmi $H$, $D_1$, $D_2$, $D_1'$, $D_2'$ et $\alpha'$.

19. Procédé selon la revendication 18 de réglage de l'orientation d'au moins un projecteur (12G, 12D) de véhicule automobile au moyen d'un dispositif selon la revendication 5, les deux projecteurs gauche (12G) et droit (12D) étant espacés entre eux d'une distance $L$, **caractérisé en ce que** l'on détermine au temps $t$:

- dans le plan contenant les axes optiques des premier (FI1) et second (FI2) faisceaux incidents, l'écrasement éventuel $E_G, E_D$ du véhicule fourni par chaque module de réglage (16G, 16D), et
- l'angle $\beta$ de roulis du véhicule en fonction de $E_G, E_D$ et $L$.

**Patentansprüche**

1. Vorrichtung zur Regelung der Ausrichtung wenigstens eines Kraftfahrzeugscheinwerfers (12G, 12D), des Typs mit wenigstens einem vom Fahrzeug getragenen Stellmodul (16G, 16D), umfassend:

- eine erste elektromagnetische Strahlungsquelle (18G, 18D), die ein erstes auftreffendes Lichtbündel (FI1) zu einem vom Fahrzeug getrennten Zielobjekt emittiert,
- Mittel (22G, 22D) zum Detektieren der von dem Zielobjekt reflektierten elektromagnetischen Strahlung,
- Mittel (24G, 24D) zum Steuern der Stellung des Scheinwerfers (12G, 12D) durch Verarbeitung eines Signals, das von den Detektionsmitteln (22G, 22D) abgegeben wird,
- eine zweite elektromagnetische Strahlungsquelle (20G, 20D), die ein zweites auftreffendes Lichtbündel (FI2) zu einem Zielobjekt emittiert,

**dadurch gekennzeichnet, dass** die erste (18G, 18D) und die zweite (20G, 20D) Strahlungsquelle zueinander vertikal versetzt sind und das erste (FI1) und das zweite (FI2) auftreffende Lichtbündel im Wesentlichen zueinander parallel sind.

2. Vorrichtung nach Anspruch 1,
**dadurch gekennzeichnet, dass** die Steuermittel (24G, 24D) vorzugsweise motorisch angetriebene Mittel (26G, 26D, 28G, 28D) zur Einstellung des Scheinwerfers steuern.

3. Vorrichtung nach Anspruch 2,
**dadurch gekennzeichnet, dass** die Mittel zur Einstellung des Scheinwerfers (12G, 12D) Mittel (26G, 26D) umfassen, die ein Stellelement zur Höheneinstellung des Scheinwerfers bilden.

4. Vorrichtung nach Anspruch 2 oder 3,
**dadurch gekennzeichnet, dass** die Mittel zur Einstellung des Scheinwerfers (12G, 12D) Mittel (28G, 28D) umfassen, die ein Stellelement zur Azimut-Einstellung des Scheinwerfers bilden.

5. Vorrichtung nach einem der Ansprüche 1 bis 4,
**dadurch gekennzeichnet, dass** sie zwei Stellmodule (16G, 16D) umfasst, die zwei Scheinwerfern links (12G) beziehungsweise rechts (12D) am Fahrzeug zugeordnet sind.

6. Vorrichtung nach einem der Ansprüche 1 bis 4,
**dadurch gekennzeichnet, dass** die erste (18G, 18D) und die zweite (20G, 20D) Strahlungsquelle und die Mittel (22G, 22D) zum Detektieren des ersten (FI1) und des zweiten (FI2) vom Zielobjekt reflektierten Lichtbündels zwei Scheinwerfern links (12G) und rechts (12D) am Fahrzeug gemein sind.

7. Vorrichtung nach den Ansprüchen 2 und 6 in Kombination,
**dadurch gekennzeichnet, dass** das Stellmodul (16D) einem der beiden Scheinwerfer (12D), dem sogenannten Master-Scheinwerfer, zugeordnet ist, wobei die Steuermittel (24D) die Mittel (26D, 28D) zur Einstellung des Master-Scheinwerfers und die Mittel (26G, 28G) zur Einstellung des anderen der beiden Scheinwerfer, des sogenannten Slave-Scheinwerfers, steuern.

8. Vorrichtung nach einem der Ansprüche 1 bis 7,
**dadurch gekennzeichnet, dass** die Detektionsmittel (22G, 22D) einen Flächensensor, zum Beispiel einen zweidimensionalen Positionssensor vom Typ PSD (Position Sensing Detector), oder eine Kamera vom Typ CCD (Charge Coupled Device) umfassen.

9. Vorrichtung nach Anspruch 8,
**dadurch gekennzeichnet, dass** der Flächensensor getrennt von jeder Strahlungsquelle (18G, 18D, 20G, 20D) angeordnet ist.

10. Vorrichtung nach einem der Ansprüche 1 bis 9,
**dadurch gekennzeichnet, dass** die Detektionsmittel (22G, 22D) für die von den vom Zielobjekt reflektierten und von der ersten (18G, 18D) und der zweiten (20G, 20D) Strahlungsquelle herrührenden Strahlungen dieselben sind.

**11.** Vorrichtung nach einem der Ansprüche 1 bis 9, **dadurch gekennzeichnet, dass** die Detektionsmittel hinsichtlich jeder vom Zielobjekt reflektierten, von eine Strahlungsquelle herrührenden Strahlung spezifisch sind.

**12.** Vorrichtung nach Anspruch 11, **dadurch gekennzeichnet, dass** jede Strahlungsquelle und die ihr eigenen Detektionsmittel einen optischen Entfernungsmesser bilden, der eine Laserdiode benutzt.

**13.** Vorrichtung nach einem der Ansprüche 1 bis 12, **dadurch gekennzeichnet, dass** sie Mittel (34, 36) zur Hemmung des Stellmoduls (16D) umfasst.

**14.** Vorrichtung nach Anspruch 13, **dadurch gekennzeichnet, dass** die Hemmmittel umfassen:

- eine zusätzliche elektromagnetische Strahlungsquelle (34), die ein zusätzliches auftreffendes Lichtbündel zum Zielobjekt emittiert,
- zusätzliche Mittel (36) zur Detektion der elektromagnetischen Strahlung, die von der zusätzlichen Quelle (34) herrührt und vom Zielobjekt reflektiert wird, und
- Mittel (24D) zum Steuern der Hemmung des Stellmoduls durch Verarbeiten eines Signals, das durch die zusätzlichen Detektionsmittel abgegeben wird.

**15.** Vorrichtung nach einem der vorhergehenden Ansprüche, **dadurch gekennzeichnet, dass** die elektromagnetische Strahlung von der Art einer durch eine Laserdiode erzeugten Infrarot-Strahlung ist.

**16.** Vorrichtung nach einem der vorhergehenden Ansprüche, **dadurch gekennzeichnet, dass** es sich bei dem Zielobjekt um den Boden, insbesondere die Fahrbahn handelt, die sich vor dem Fahrzeug erstreckt.

**17.** Verfahren zur Regelung der Leuchtweite wenigstens eines Kraftfahrzeugscheinwerfers (12G, 12D) mittels einer Vorrichtung (14) nach einem der vorhergehenden Ansprüche, bei der die erste (18G, 18D) und zweite (20G, 20D) Strahlungsquelle vertikal um eine Höhe $H$ versetzt sind, wobei das Zielobjekt im Wesentlichen horizontal ist, durch das

- in einer die optischen Achsen des ersten (FI1) und des zweiten (FI2) auftreffenden Lichtbündels enthaltenden Ebene bestimmt werden:

- in einer Abgleichphase:

  - die erste $D_1$ und die zweite $D_2$ Bezugsentfernung, die von dem ersten beziehungsweise dem zweiten auftreffenden Lichtbündel zwischen einerseits der ersten (18G, 18D) und der zweiten (20G, 20D) Strahlungsquelle und andererseits dem Zielobjekt zurückgelegt wird,
  - ein Bezugswinkel $\alpha$, der der Neigung der auftreffenden Lichtbündel (FI1, FI2) bezüglich der Horizontalen abhängig von $H$, $D_1$ und $D_2$ entspricht,

- in einer Zeit $t$ nach der Abgleichphase:

  - die erste $D_1'$ und die zweite $D_2'$ Entfernung, die von dem ersten (FI1) beziehungsweise dem zweiten (FI2) auftreffenden Lichtbündel zwischen einerseits der ersten (18G, 18D) und der zweiten (20G, 20D) Strahlungsquelle und andererseits dem Zielobjekt zurückgelegt wird,
  - der Neigungswinkel $\alpha$ der auftreffenden Lichtbündel (FI1, FI2) bezüglich der Horizontalen abhängig von $H$, $D_1'$ und $D_2'$,

- die Stellung des Scheinwerfers (12G, 12D) abhängig von $\Delta\alpha = \alpha'-\alpha$ geregelt wird.

**18.** Verfahren nach Anspruch 17, **dadurch gekennzeichnet, dass** die eventuelle Einfederung $E$ des Fahrzeugs in einer die optischen Achsen des ersten (FI1) und des zweiten (FI2) auftreffenden Lichtbündels enthaltende Ebene in Abhängigkeit von Parametern gewählt aus $H$, $D_1$, $D_2$, $D_1'$, $D_2'$ und $\alpha'$ in der Zeit $t$ bestimmt wird.

**19.** Verfahren nach Anspruch 18 zur Regelung der Ausrichtung wenigstens eines Kraftfahrzeugscheinwerfers (12G, 12D) mittels einer Vorrichtung nach Anspruch 5, wobei die beiden Scheinwerfer links (12G) und rechts (12D) einem Abstand $L$ voneinander aufweisen, **dadurch gekennzeichnet, dass** in der Zeit $t$

- die von jedem Stellmodul (16G, 16D) gelieferte, eventuelle Einfederung $E_G$, $E_D$ des Fahrzeugs in der Ebene, die die optischen Achsen des ersten (FI1) und des zweiten (FI2) auftreffenden Lichtbündels enthält, und
- der Rollwinkel $\beta$ des Fahrzeugs in Abhängigkeit von $E_G$, $E_D$ und $L$ bestimmt werden.

## Claims

1. Apparatus for adjusting the orientation of at least one headlight (12G, 12D) in a motor vehicle, of the type comprising at least one adjusting module (16G, 16D), carried by the vehicle, including:

   - a first electromagnetic radiation source (18G, 18D) for emitting a first incident beam (FI1) towards a target separate from the vehicle,

   - means (22G, 22D) for detecting the electromagnetic radiation reflected by the target, and

   - means (24G, 24D) for controlling the orientation of the headlight (12G, 12D) by processing a signal emitted by the detecting means (22G, 22D), and

   a second electromagnetic radiation source (20G, 20D) for emitting a second incident beam (FI2) towards the target,
   **characterised in that** the first radiation source (18G, 18D) and the second radiation source (20G, 20D) are offset vertically from each other, and the first incident beam (FI1) and the second incident beam (FI2) are substantially parallel to each other.

2. Apparatus according to Claim 1, **characterised in that** the control means (24G, 24D) control means (26G, 26D, 28G, 28D) for positioning the headlight, which are preferably motorised.

3. Apparatus according to Claim 2, **characterised in that** the means for positioning the headlight (12G, 12D) include means (26G, 26D) constituting an actuator for positioning the headlight horizontally.

4. Apparatus according to Claim 2 or Claim 3, **characterised in that** the means for positioning the headlight (12G, 12D) comprise means (28G, 28D) constituting an actuator for positioning the headlight in azimuth.

5. Apparatus according to any one of Claims 1 to 4, **characterised in that** it includes two adjusting modules (16D, 16D) which are associated respectively with two headlights, namely a left hand headlight (12G) and a right hand headlight (12D) of the vehicle.

6. Apparatus according to any one of Claims 1 to 4, **characterised in that** the first radiation source (18G, 18D) and the second radiation source (20G, 20D) and the detecting means (22G, 22D) for the first beam (FR1) and the second beam (FR2) reflected by the target are common to two headlights, namely a left hand headlight (12G) and a right hand headlight (12D) of the vehicle.

7. Apparatus according to Claims 2 and 6 taken together, **characterised in that** the adjusting module (16D) is associated with one of the two headlights (12D), referred to as the master headlight, the control means (24D) that control the means (26D, 28D) for positioning the master headlight, and means (26G, 28G) for positioning the other one of the two headlights which is referred to as the slave headlight.

8. Apparatus according to any one of Claims 1 to 7, **characterised in that** the detecting means (22G, 22D) comprise a surface detector such as a two-dimensional position sensing detector or a camera of the charge coupled device type.

9. Apparatus according to Claim 8, **characterised in that** the surface detector is separated from each radiation source (18G, 18D, 20G, 20D).

10. Apparatus according to any one of Claims 1 to 9, **characterised in that** the detecting means (22G, 22D) are common to the radiations reflected by the target and coming from the first radiation source (18G, 18D) and the second radiation source (20G, 20D).

11. Apparatus according to any one of Claims 1 to 9, **characterised in that** the detecting means are specific to each radiation reflected by the target and coming from a radiation source.

12. Apparatus according to Claim 11, **characterised in that** each radiation source and the detecting means which are specific to it constitute an optical telemeter employing a laser diode.

13. Apparatus according to any one of Claims 1 to 12, **characterised in that** it includes means (34, 36) for inhibiting the adjusting module (16D).

14. Apparatus according to Claim 13, **characterised in that** the inhibiting means comprise:

   - a supplementary electromagnetic radiation source (34) for emitting a supplementary incident beam towards the target,

   - supplementary means (36) for detecting the electromagnetic radiation coming from the supplementary source (34) and reflected by the target, and

   - means (24D) for controlling the inhibition of the adjusting module by processing of a signal emitted by the supplementary detecting means.

15. Apparatus according to any one of the preceding Claims, **characterised in that** the electromagnetic radiation is of the infrared type, produced by a laser diode.

16. Apparatus according to any one of the preceding Claims, **characterised in that** the target is the ground, and in particular the road extending in front of the vehicle.

17. A method for adjusting the orientation of at least one motor vehicle headlight (12G, 12D) by means of an apparatus (14) in accordance with any one of the preceding Claims, in which the first radiation source (18G, 18D) and the second radiation source (20G, 20D) are offset from each other vertically by a height (H), the target being substantially horizontal, whereby:

   - in a plane containing the optical axes of the first incident beam (FI1) and the second incident beam (FI2), the following determinations are carried out:

     - during a calibrating phase:

       - a first reference distance $D_1$ and a second reference distance $D_2$, through which the first incident beam (FI1) and the second incident beam (FI2) pass between, firstly, the first radiation source (18G, 18D) and the second radiation source (20G, 20D), and secondly the target, and

       - a reference angle $\alpha$ corresponding to the inclination of the incident beams (FI1, FI2) with respect to the horizontal, as a function of H, $D_1$ and $D_2$, and

     - at a time t following the calibrating phase:

       - the first distance $D_1'$ and the second distance $D_2'$ travelled by the first incident beam (FI1) and the second incident beam (FI2) between, firstly the first radiation source (18G, 18D) and the second radiation source (20G, 20D) and, secondly the target, and

       - the angle $\alpha'$ of inclination of the incident beams (FI1, FI2) with respect to the horizontal, as a function of H, $D_1'$ and $D_2'$, and

   - the orientation of the headlight (12G, 12D) is controlled as a function of $\Delta\alpha = \alpha' - \alpha$.

18. A method according to Claim 17, **characterised in that** at the time t a determination is made of any dimensional reduction E of the vehicle in a plane containing the optical axes of the first incident beam (FI1) and the second incident beam (FI2), as a function of a parameter selected from the group consisting of H, $D_1$, $D_2$, $D_1'$, $D_2'$ and $\alpha'$.

19. A method according to Claim 18 for controlling the orientation of at least one motor vehicle headlight (12G, 12D) by means of an apparatus according to Claim 5, the two headlights, namely the left hand headlight (12G) and the right hand headlight (12D) being spaced apart by a distance L, **characterised in that** at the time t a determination is made of:

   - in the plane containing the optical axes of the first incident beam (FI1) and the second incident beam (FI2), any dimensional reduction $E_G$, $E_D$ of the vehicle supplied by each adjusting module (16G, 16D) and

   - the roll angle $\beta$ of the vehicle as a function of $E_G$, $E_D$ and L.

**Fig. 1**

# Fig. 2

EP 1 375 249 B1

**Fig. 3**

18G,18D
20G,20D
22G,22D
f
H
FI1
FI2
FR1
FR2
D₁
D₂
α
α
b₁

**Fig. 4**

18G,18D
22G,22D
20G,20D
b₁
b₂
H

**Fig. 5**

FR1
FR2
X₁
X₂
22G,22D

Fig. 6

Fig. 7

Fig. 8

## Fig. 9

14

-32-

30D

16D

26D    36

34    28D    26G    28G

-24D-

22D    18D

20D

EP 1 375 249 B1

16